# EUROPEAN PATENT APPLICATION

(11) **EP 3 395 844 A1**
(43) Date of publication of application: **31.10.2018**
(21) Application number: 16878545.9
(22) Date of filing: 15.12.2016
(51) Int. Cl.: C08F 290/06, B32B 27/30, C09J 4/02, C09J 7/02, G06F 3/041

(54) **CURABLE COMPOSITION, ADHESIVE LAYER, TRANSPARENT SURFACE MATERIAL, LAYERED BODY, AND IMAGE DISPLAY DEVICE**

(30) Priority: 21.12.2015 JP 2015249002
(71) Applicant: AGC Inc., Tokyo 100-8405 (JP)
(72) Inventor: SHIBUYA, Takashi, Tokyo 100-8405 (JP); KAKUTA, Junichi, Tokyo 100-8405 (JP)
(74) Representative: Müller-Boré & Partner Patentanwälte PartG mbB
(86) International application number: PCT/JP2016/087445
(87) International publication number: WO 2017/110655

(57) **Abstract**

To provide a curable composition to be used to form an adhesive layer having deterioration by light suppressed, an adhesive layer obtained by curing the curable composition, and a transparent surface material, laminate and image display device provided with the adhesive layer. A curable composition characterized by comprising a curable compound, a photopolymerization initiator and a light stabilizer, wherein the curable compound comprises at least one urethane (meth)acrylate (A) having an addition-polymerizable unsaturated group and a molecular weight of 1,000-100,000, and at least one monomer (B) having an addition-polymerizable unsaturated group and a molecular weight of 100-600, and the light stabilizer is a light stabilizer having an addition-polymerizable unsaturated group in the molecule.

## Description

### TECHNICAL FIELD

The present invention relates to a curable composition, an adhesive layer, an adhesive layer-equipped transparent surface material, a laminate and an image display device.

### BACKGROUND ART

Heretofore, a member and a surface material, a member and a member, or a surface material and a surface material, have been bonded via an adhesive layer. Such an adhesive layer is usually formed by curing a curable composition to provide adhesive properties. In recent years, it is desired to use an adhesive layer for bonding where optical transparency is required.

As an example, one may be mentioned wherein in order to protect a display surface of a liquid crystal device from scratching, etc., the display surface and a transparent surface material such as a cover glass are bonded via an adhesive layer. The adhesive layer used in such an application receives light from outside of the display surface and the transparent surface material (hereinafter referred to also as external light), and therefore, the adhesive layer may be deteriorated by such light after the bonding.

Patent Document 1 discloses an adhesive sheet for a flat panel display, made mainly of a polyoxyalkylene-type polymer, which contains a hindered amine-type light stabilizer represented by a specific chemical formula.

Patent Document 2 discloses a double-sided adhesive tape having an adhesive layer formed on each side of a tape substrate, to be used for bonding between components constituting a display device, wherein the adhesive layer contains at least 2 mass% and at most 10 mass% of an ultraviolet absorber, and at least 0.5 mass% and at most 10 mass% of a hindered amine-type light stabilizer.

However, the above adhesive layer (corresponding to the adhesive sheet in Patent Document 1, and corresponding to the adhesive layer of the double-sided adhesive tape in Patent Document 2) is not sufficient in suppression of the deterioration of the adhesive layer by external light.

### PRIOR ART DOCUMENTS

### PATENT DOCUMENTS

Patent Document 1: WO2009/102000
Patent Document 2: JP-A-2004-26929

### DISCLOSURE OF INVENTION

### TECHNICAL PROBLEM

In view of the above problem, it is an object of the present invention to provide a curable composition to be used for forming an adhesive layer having deterioration by light suppressed, an adhesive layer obtainable by curing the curable composition, and a transparent surface material, laminate and image display device, provided with the adhesive layer.

### SOLUTION TO PROBLEM

The curable composition of the present invention is characterized by comprising a curable compound, a photopolymerization initiator and a light stabilizer, wherein
the curable compound comprises at least one urethane (meth)acrylate (A) having an addition-polymerizable unsaturated group and having a molecular weight of from 1,000 to 100,000, and at least one monomer (B) having an addition-polymerizable unsaturated group and having a molecular weight of from 100 to 600, and
the light stabilizer is a light stabilizer having an addition-polymerizable unsaturated group in the molecule.

The adhesive layer of the present invention is characterized in that it is an adhesive layer formed by curing the above curable composition. Further, the adhesive layer of the present invention is preferably such that in the dynamic viscoelasticity measurement after curing, the storage shear modulus of 1 Hz at 25°C is from 5×10² to 2.5×10⁴ Pa, and the loss tangent is at most 1. 4.

The adhesive layer-equipped transparent surface material of the present invention is characterized by having the above adhesive layer on at least one surface of a transparent surface material.

The laminate of the present invention is characterized in that a pair of surface materials are laminated via the above adhesive layer.

The display device of the present invention is characterized by comprising an image display device main body, the above adhesive layer and a transparent surface material, wherein via the adhesive layer, the outermost member on the viewing side of the image display apparatus main body and the transparent surface material are laminated.

### ADVANTAGEOUS EFFECTS OF INVENTION

The curable composition of the present invention is suitable for forming an adhesive layer to bond surface materials to each other and is capable of reducing deterioration by light of the adhesive layer after curing. The adhesive layer obtainable by curing the curable composition of the present invention is suitable as an adhesive layer to bond surface materials to each other, and is less susceptible to deterioration by light.

The adhesive layer-equipped transparent surface material of the present invention has the adhesive layer of the present invention on at least one surface of a transparent surface material, wherein the adhesive layer is less susceptible to deterioration by light. In the laminate of the present invention, the adhesive layer is less susceptible to deterioration by light.

In the image display device of the present invention, one surface of the adhesive layer is bonded to the outermost member on the viewing side of the image display device, and to the other surface of the adhesive layer, an optional surface material is bonded, wherein the adhesive layer is less susceptible to deterioration by light.

### DESCRIPTION OF EMBODIMENTS

In this specification, the following terms are used in the following meanings, respectively.

"Transparent" means having an optical transparency to visible light. Specifically it means that the light transmittance at a wavelength of from 420 to 800 nm is within a range of from 70 to 99%.

The "number average molecular weight (Mn)" is a molecular weight as calculated as polystyrene obtainable by measuring by gel permeation chromatography using a calibration curve prepared by using standard polystyrene samples with known molecular weights.

A polyoxyalkylene polyol and a polyoxyalkylene monool may be collectively referred to as a polyoxyalkylene poly(mono)ol.

A "(meth)acrylate" is used in the sense of collectively referring to a methacrylate and an acrylate. Further, "(meth)" in the name of a compound or group like in e.g. a (meth)acryloyloxy group, means both of a case where it is a hydrogen atom and a case where the hydrogen atom is substituted by a methyl group.

### <Curable composition>

The curable composition of the present invention comprises a curable compound, a photopolymerization initiator and a light stabilizer as essential components. Further, the curable composition of the present invention may contain a non-curable compound, an ultraviolet absorber or an antioxidant as an optional component. Furthermore, the curable compound of the present invention may contain other than the above-mentioned components.

### [Curable compound]

The curable compound comprises at least one urethane (meth)acrylate (A) having an addition-polymerizable unsaturated group and having a number average molecular weight of from 1,000 to 100,000, and at least one monomer (B) having an addition-polymerizable unsaturated group and having a molecular weight of from 100 to 600.

The amount of the curable compound to be contained in the curable composition, is preferably from 10 to 99 mass% in the total amount (100 mass%) of the curable compound and the non-curable compound. When it is at least the lower limit value in the above range, it is possible to sufficiently fix surface materials to each other at the time of fixing them by using the cured product (adhesive layer) during curing, and it is also possible to prevent positional displacement with time after fixation. On the other hand, when it is at most the upper limit value, it is possible to reduce a stress formed by shrinkage of the cured product (adhesive layer) during curing. From the above viewpoint, the amount of the curable compound is more preferably from 15 to 95 mass%, further preferably from 20 to 90 mass%.

### [Urethane (meth)acrylate (A)]

The urethane (meth)acrylate (A) has an addition-polymerizable unsaturated group and has a number average molecular weight of from 1,000 to 100,000. Since the urethane (meth)acrylate (A) has an addition-polymerizable unsaturated group, it will react with another urethane (meth)acrylate (A) and the monomer (B) by a curing reaction, to form a network and thereby to form an adhesive layer. Further, since the number average molecular weight is from 1,000 to 100,000, the storage shear modulus of the adhesive layer after curing can be made to be within a desired range.

The addition-polymerizable unsaturated group of the urethane (meth)acrylate (A) is an acryloyloxy group or a methacryloyloxy group. Since the curing rate is high, from the viewpoint of productivity, the addition-polymerizable unsaturated group is preferably an acryloyloxy group.

In the urethane (meth)acrylate (A), the number of addition-polymerizable unsaturated groups in one molecule is at least 1, preferably at least 1 and at most 4, further preferably 2 or 3. Further, also in consideration of a case where by-products having no addition-polymerizable unsaturated group may be formed during the production of the urethane (meth)acrylate (A), the average number of addition-polymerizable unsaturated groups in the urethane (meth)acrylate (A) is preferably from 0.8 to 4.0, more preferably from 0.8 to 3.0.

The number average molecular weight of the urethane (meth)acrylate (A) is preferably from 10,000 to 80,000, more preferably from 15,000 to 70,000. When the number average molecular weight is within the above range, a curable composition having a viscosity suitable to form the adhesive layer tends to be readily obtainable. In a case where two or more types of urethane (meth)acrylate (A) are used in combination, it is preferred that the respective number average molecular weights are within the above range.

The urethane (meth)acrylate (A) is a compound having at least one urethane bond in a molecule and having at least one (meth)acryloyloxy group at a terminal of the molecule. For example, an urethane acrylate may be mentioned which is synthesized by using a polyoxyalkylene polyol and a polyisocyanate as raw materials. In this case, the urethane (meth)acrylate (A) has an oxyalkylene chain and a urethane bond.

The urethane (meth)acrylate (A) is, for example, preferably one obtained by reacting a polyoxyalkylene polyol and a polyisocyanate compound to obtain a prepolymer having an isocyanate group at a terminal, and then reacting, to the isocyanate group of the prepolymer, a monomer having a (meth)acryloyloxy group and having a group reactive with an isocyanate group, to introduce the (meth)acryloyloxy group.

The polyisocyanate to be used for producing the urethane (meth)acrylate (A) is preferably a diisocyanate selected from the group consisting of an aliphatic diisocyanate, an alicyclic diisocyanate and a hardly yellowing aromatic diisocyanate.

Examples of the aliphatic polyisocyanate include hexamethylene diisocyanate, 2,2,4-trimethyl-hexamethylene diisocyanate, 2,4,4-trimethyl-hexamethylene diisocyanate, etc. Examples of the alicyclic polyisocyanate include isophorone diisocyanate, methylenebis(4-cyclohexyl isocyanate), etc. The hardly yellowing aromatic diisocyanate includes xylylene diisocyanate, etc. One of them may be used alone, or two or more of them may be used in combination.

The number average molecular weight of the polyoxyalkylene polyol to be used in the preparation of the urethane (meth)acrylate (A) is preferably from 500 to 20,000, more preferably from 1,000 to 18,000, further preferably from 1,500 to 15,000.

The index at the time of reacting the polyoxyalkylene polyol and the polyisocyanate compound, is preferably within a range of from 105 to 200. Here, the index is a value obtained by dividing the number of moles of isocyanate groups in the polyisocyanate compound by the number of moles of hydroxy groups in the polyol, followed by multiplying 100 times.

The group which reacts with an isocyanate group of the monomer having a (meth)acryloyloxy group to be used in the preparation of the urethane (meth)acrylate (A), is a group having active hydrogen (such as a hydroxy group, an amino group, etc.).

A specific example of the monomer may be a hydroxyalkyl acrylate having a hydroxyalkyl group having from 2 to 6 carbon atoms (2-hydroxyethyl acrylate, 2-hydroxypropyl acrylate, 2-hydroxybutyl acrylate, 4-hydroxybutyl acrylate, etc.). In particular, a hydroxyalkyl acrylate having a hydroxyalkyl group having from 2 to 4 carbon atoms is preferred.

The urethane (meth)acrylate (A) is, particularly preferably, a reaction product of at least one polyoxyalkylene polyol having a number average molecular weight of from 1,500 to 15,000, at least one alicyclic diisocyanate and a hydroxyalkyl acrylate.

The viscosity at 25°C of the urethane (meth)acrylate (A) is preferably from 10 to 2,000 Pa·s, more preferably from 20 to 1,800 Pa·s, further preferably from 30 to 1,600 Pa·s. When the viscosity is within the above range, it will be easy to obtain a curable composition suitable to form the adhesive layer. Here, the viscosity is a value measured at 25°C using an E-type viscometer.

The content proportion of the urethane (meth)acrylate (A) to 100 mass% of the curable compound is preferably from 10 to 90 mass%, more preferably from 20 to 90 mass%, further preferably from 30 to 80 mass%. Within this range, the adhesiveness and curability of the curable composition will be good, and heat resistance of a cured product (adhesive layer) of the curable composition becomes good.

### [Monomer (B)]

The monomer (B) has an addition-polymerizable unsaturated group and having a molecular weight of from 100 to 600. Since the curable composition contains the monomer (B), it is possible to improve the adhesion and light transmittance of the adhesive layer obtainable by curing the curable composition. Since the monomer (B) has an addition polymerizable unsaturated group, it reacts with the urethane (meth)acrylate (A), to form a network and thereby to form an adhesive layer.

As the addition-polymerizable unsaturated group of the monomer (B), from the viewpoint of high curing speed and from such a viewpoint that it is possible to obtain an adhesive layer having high transparency, preferred is a (meth)acryloyloxy group, and more preferred is an acryloyloxy group.

The monomer (B) is, from the viewpoint of curability of the curable composition and mechanical properties of the adhesive layer, preferably one having from 1 to 3 addition-polymerizable unsaturated groups per molecule.

The molecular weight of the monomer (B) is from 100 to 600, preferably from 110 to 400. When the molecular weight is at least 100, volatilization of the monomer will be suppressed. When the molecular weight is at most 600, the adhesion between the surface material and the adhesive layer will be good. In a case where two or more monomers (B) are used in combination, it is preferred that the respective molecular weights are within the above range.

The proportion of the monomer (B) contained in the curable compound is preferably from 10 to 90 mass%, more preferably from 10 to 70 mass%, further preferably from 20 to 60 mass%, to 100 mass% of the curable compound.

The monomer (B) can be roughly classified into a monomer (B1) having no hydroxy group in the molecule and a monomer (B2) having a hydroxy group in the molecule. Depending on the application and the required physical properties of a cured product (adhesive layer) obtainable by curing the curable composition, a decision is made as to which monomer should be selected among them.

### [Monomer (B1)]

When the monomer (B) contains a monomer (B1), it is possible to lower the storage shear modulus of a cured product obtainable by curing the curable composition.

The addition-polymerizable unsaturated group which the monomer (B1) has, is preferably an acryloyloxy group or a methacryloyloxy group, more preferably an acryloyloxy group, from the viewpoint of a high curing speed and from such a viewpoint that an adhesive layer having high transparency is obtainable.

The molecular weight of the monomer (B1) is from 100 to 500, preferably from 150 to 400. In a case where two or more monomers (B1) are used in combination, it is preferred that the molecular weights of the respective monomers (B1) are within the above range.

The monomer (B1) having an acryloyloxy group may be an alkyl acrylate having a C₈₋₂₂ alkyl group (such as 2-ethylhexyl acrylate, n-octyl acrylate, n-decyl acrylate, n-dodecyl acrylate, n-octadecyl acrylate, n-behenyl acrylate, etc.), an acrylate having an alicyclic hydrocarbon group (such as isobornyl acrylate, adamantyl acrylate, etc.). Among them, preferred is an alkyl acrylate having a C₈₋₂₂ alkyl group, and particularly preferred is n-dodecyl acrylate or 2-ethylhexyl acrylate.

In a case where the curable composition contains the monomer (B1), the content of the monomer (B1) is preferably from 1 to 60 mass%, more preferably from 10 to 50 mass%, to 100 mass% of the curable compound. When the content is at least the lower limit value, the effect of containing the monomer (B1) can be exhibited, and when it is at most the upper limit value, it is possible to cure the curable composition satisfactorily.

### [Monomer (B2)]

When the monomer (B) contains the monomer (B2), it is possible to improve the adhesion of a cured product obtainable by curing the curable composition.

The number of hydroxy groups in the monomer (B2) is preferably 1 or 2. The number of carbon atoms in the monomer (B2) is preferably from 2 to 8. The addition-polymerizable unsaturated group which the monomer (B2) has, is preferably an acryloyloxy group or a methacryloyloxy group, more preferably an acryloyloxy group from the viewpoint of a high curing speed and from such a viewpoint that an adhesive layer having high transparency is obtainable.

The monomer (B2) is preferably a hydroxy acrylate or hydroxy methacrylate having a hydroxy group. Specifically, it may, for example, be 2-hydroxypropyl acrylate, 2-hydroxybutyl acrylate, 4-hydroxybutyl acrylate, 6-hydroxyhexyl acrylate, 2-hydroxypropyl methacrylate, 2-hydroxybutyl methacrylate, 4-hydroxybutyl methacrylate, 6-hydroxyhexyl methacrylate, etc. Among them, preferred is a hydroxy acrylate having a C₂₋₈ hydroxyalkyl group, and particularly preferred is 4-hydroxybutyl acrylate.

When the curable compound contains the monomer (B2), the content of the monomer (B2) is preferably from 1 to 60 mass%, more preferably from 5 to 50 mass%, to 100 mass% of the curable compound. When the content is at least the lower limit value, the effect of containing the monomer (B2) can be exhibited, and when it is at most the upper limit value, the curable composition can be cured satisfactorily.

### [Light stabilizer]

In the present invention, the light stabilizer is a light stabilizer having an addition-polymerizable unsaturated group in the molecule. When the curable composition contains the light stabilizer, an adhesive layer obtainable by curing the curable composition will be prevented from photodeterioration, and the weather resistance tends to be high.

The light stabilizer contained in the curable composition of the present invention has an addition-polymerizable unsaturated group in the molecule, whereby when the curable composition is cured, the light stabilizer will react with the urethane (meth)acrylate (A) and the monomer (B), and will be taken into a network of the cured product. As a result, bleeding out or crystallization of the light stabilizer in the adhesive layer will be reduced, and it is possible to prevent a change in the physical properties of the adhesive layer by light over a long period of time. In particular, the adhesive layer obtained by curing the curable composition containing the light stabilizer, is capable of preventing a change in the physical properties by light of ultraviolet rays over a long period of time, as compared with the case of incorporating another light stabilizer.

Further, in a case where the storage shear modulus of the adhesive layer is low, in the adhesive layer, any urethane (meth)acrylate (A) or monomer (B) not reacted for a curing reaction, tends to have high mobility, and is likely to bleed out or to be crystallized. Therefore, the use of the light stabilizer having an addition-polymerizable unsaturated group in the molecule, presents a particularly remarkable effect in the curable composition to obtain an adhesive layer having a low storage shear modulus after curing.

As the light stabilizer, from such a viewpoint that the reactivity with the urethane (meth)acrylate (A) and the monomer (B) is high and light stability of the curable composition will be high, preferred is a hindered amine-type light stabilizer represented by the following formula 1.

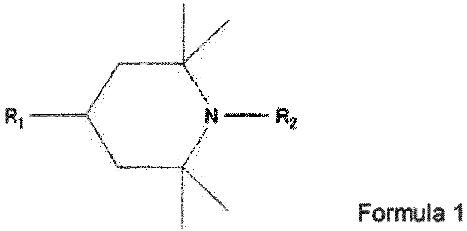

In the formula 1, R₁ is an organic group having an addition-polymerizable unsaturated group, and R₂ is a hydrogen atom, a C₁₋₆ alkyl group or a C₁₋₆ alkoxy group.
R₁ is preferably a structure having a (meth)acryloyloxy group as the addition-polymerizable unsaturated group, wherein the number of carbon atoms in an alkylene group linking the (meth)acryloyloxy group and the piperidine ring is from 0 to 3. Among them, R₁ is particularly preferably made of a (meth)acryloyloxy group.
R₂ is preferably a hydrogen atom, a C₁₋₃ alkyl group or a C₁₋₃ alkoxy group, more preferably a hydrogen atom or a C_{1 or 2} alkyl group.

As an example of the light stabilizer, 1,2,2,6,6-pentamethyl-4-piperidyl methacrylate or 2,2,6,6-tetramethyl-4-piperidyl methacrylate may be mentioned.

The content of the light stabilizer contained in the curable composition is preferably from 0.001 to 10 parts by mass, more preferably from 0.01 to 8 parts by mass, to 100 parts by mass in total amount of the curable compound and the non-curable compound.

### [Non-curable compound]

The curable composition preferably contains a non-curable compound. The non-curable compound is a compound which undergoes no curing reaction with any of the urethane (meth)acrylate (A), the monomer (B) and the light stabilizer at the time of curing the curable composition. When the non-curable compound is incorporated, it is possible to reduce the storage shear modulus of the cured product (adhesive layer) obtainable by curing the curable compound.

The non-curable compound is preferably a compound having from 1 to 6 hydroxy groups per molecule. As such a non-curable compound, a polyoxyalkylene polyol or a polyoxyalkylene monool may be mentioned. As the non-curable compound, one type may be used alone, or two or more types may be used in combination. By using two or more types in combination, it will be easy to adjust the physical properties such as viscosity, adhesion, etc.

In a case where the curable composition contains a non-curable compound having a hydroxy group, it is preferred to incorporate a monomer (B2). When a monomer (B2) having a hydroxy group and a non-curable compound having a hydroxy group co-exist in the curable composition, due to an interaction between the hydroxyl groups (e.g. hydrogen bonding), the non-curable compound can stably exist in a cured product obtainable by curing the curable compound and it is possible to increase the stability of the cured product.

The number average molecular weight of the non-curable compound is preferably from 500 to 20,000, more preferably from 1,000 to 18,000, further preferably from 1,500 to 15,000. When it is at least the lower limit value in the above range, the polarity will not be too high, and in the curable composition, good compatibility with the curable compound can be easily obtained. When it is at most the upper limit value, due to the interaction between a hydroxy group derived from the curable compound and a hydroxy group of the non-curable compound, it is possible to readily obtain the effect of stabilizing the non-curable compound in a cured product (adhesive layer) after curing.

As the non-curable compound, it is preferred to use a polyol with the same or similar structure as the polyoxyalkylene polyol used as a raw material for the urethane (meth)acrylate (A) coexisting in the curable composition. Thus, it is possible to improve compatibility of the non-curable compound and other components in the curable composition.

The amount of the non-curable compound contained in the curable composition is preferably from 1 to 90 mass% to the total amount (100 mass%) of the curable compound and the non-curable compound. When it is at least the lower limit value in the above range, it tends to be easy to sufficiently obtain the effect to reduce the stress formed by shrinkage of the cured product (adhesive layer) at the time of curing. On the other hand, when it is at most the upper limit value, at the time of fixing the surface materials to each other by using a cured product (adhesive layer) obtained by curing the curable composition, they can be sufficiently fixed, and it is possible to prevent positional displacement after fixing. From the above viewpoint, the content of the non-curable compound is more preferably from 5 to 85 mass%, further preferably from 10 to 80 mass%.

### [Photopolymerization initiator]

The photopolymerization initiator contained in the curable composition is not particularly limited, but in order to use it together with an ultraviolet absorber, it is preferred that the absorption wavelength of the photopolymerization initiator has a region different from the absorption wavelength of the ultraviolet absorber. For example, as the photopolymerization initiator, an acylphosphine oxide-type photopolymerization initiator may be mentioned.

The acylphosphine oxide-type photopolymerization initiator may, for example, be bis(2,4,6-trimethylbenzoyl)-phenyl phosphine oxide (product name of BASF Corp.: IRGACURE 819), 2,4,6-trimethylbenzoyl-diphenyl-phosphine oxide (product name of BASF Corp.: LUCIRIN TPO), etc.

Particularly, bis(2,4,6-trimethylbenzoyl)-phenyl phosphine oxide is more preferred in that it is an initiator having a photobleaching effect. The photobleaching effect is such an effect that the initiator itself has absorption in the visible light region and thus shows a pale yellow before light irradiation, but along with light irradiation, decomposition of the initiator proceeds, and thus the absorption capacity of the visible light wavelength is reduced, and transmittance in the visible light wavelength is improved to bring about colorless transparency.

The content of the photopolymerization initiator to be contained in the curable composition is preferably from 0.01 to 10 parts by mass, more preferably from 0.05 to 7 parts by mass, further preferably from 0.1 to 5 parts by mass, to 100 parts by mass of the total amount of the curable compound and the non-curable compound. When it is at least the lower limit value in the above range, good curability can be easily obtained. When it is at most the upper limit value, coloring after curing tends to be reduced.

As the photopolymerization initiator, an acylphosphine oxide-type photopolymerization initiator may be used alone, or it may be used in combination with a known photopolymerization initiator other than the acylphosphine oxide-type. The amount of the photopolymerization initiator other than the acylphosphine oxide-type is preferably less than 100 mass%, more preferably at most 50 mass%, further preferably at most 10 mass%, in the total of the photopolymerization initiators.

### [Antioxidant]

The antioxidant is not particularly limited, but is preferably at least one member selected from the group consisting of a phenol-type antioxidant, a phosphorus-type antioxidant and an antioxidant having a thioether skeleton. The thioether skeleton means R-S-R' (R and R' are each independently an organic group containing a carbon atom bonded to the sulfur atom in the formula). Each of them can be suitably selected for use from known antioxidants. Two or more of them may be used in combination.

The content of the antioxidant contained in the curable composition is preferably from 0.05 to 5 parts by mass, more preferably from 0.07 to 4 parts by mass, further preferably from 0.1 to 3 parts by mass, to 100 parts by mass of the total amount of the curable compound and the non-curable compound. When it is at least the lower limit value in the above range, the effect of addition can be sufficiently obtained. When it is at most the upper limit value, bleeding out can be sufficiently reduced.

### [Ultraviolet absorber]

The ultraviolet absorber is not particularly limited, but it is preferred to use a benzotriazole-type ultraviolet absorber.

Examples of the benzotriazole-type ultraviolet absorber include a 3-(2H-benzotriazol-2-yl)-5-(1,1-dimethylethyl)-4-hydroxy-benzenepropanoic acid alkyl ester, 2-(2H-benzotriazol-2-yl)-6-(1-methyl-1-phenylethyl)-4-(1,1,3,3-tetramethylbutyl) phenol (e.g. product name of BASF Corp.: Tinuvin 928, Tinuvin 213), etc.

Among them, a 3-(2H-benzotriazol-2-yl)-5-(1,1-dimethylethyl)-4-hydroxybenzenepropanoic acid alkyl ester is preferred, from such a viewpoint that initial coloring is little.

As the ultraviolet absorber containing a 3-(2H-benzotriazol-2-yl)-5-(1,1-dimethylethyl)-4-hydroxy-benzenepropanoic acid alkyl ester, Tinuvin 384-2 (product name, manufactured by BASF Corp., residue: 95 mass%), etc. may be mentioned.

The amount of the ultraviolet absorber contained in the curable composition is preferably from 0.01 to 10 parts by mass, more preferably from 0.03 to 4 parts by mass, further preferably from 0.05 to 3 parts by mass, to100 parts by mass of the total amount the curable compound and the non-curable compound. When it is at least the lower limit value in the above range, the effect of addition can be sufficiently obtained. When it is at most the upper limit value, a good cured state is obtainable at the time of curing the curable composition.

As the ultraviolet absorber, one type of a benzotriazole-type ultraviolet absorber may be used alone, or may be used in combination with another ultraviolet absorber. The amount of another ultraviolet absorber is preferably at most 50 mass%, more preferably at most 30 mass%, further preferably at most 30 mass%, in 100 mass% of the total of the ultraviolet absorbers.

### [Other additives]

As additives other than the above, known additives such as a polymerization inhibitor, a chain transfer agent, a photo-curing accelerator, a flame retardant, an adhesion promoting agent (a silane coupling agent, a tackifier resin, etc.), a pigment, a dye, etc. may be contained in the curable composition.

As the polymerization inhibitor, polymerization inhibitors of hydroquinone type (2,5-di-tert-butyl hydroquinone, etc.), catechol-type (p-tert-butylcatechol, etc.), anthraquinone-type, phenothiazine-type, hydroxytoluene-type, etc. may be mentioned.

As the chain transfer agent, for example, a compound having a thiol group (n-octyl mercaptan, n-dodecyl mercaptan, 1,4-bis(3-mercaptobutyryloxy)butane, pentaerythritol tetrakis(3-mercapto butyrate), etc. may be mentioned.

In a case where the curable composition contains other additives, the total content of such other additives is preferably at most 10 parts by mass, more preferably at most 8 parts by mass, to 100 parts by mass of the total amount of the curable compound and the non-curable compound.

### [Viscosity of curable composition]

The viscosity of the curable composition is preferably from 10 to 100,000 mPa·s in order to secure applicabilities at the time of coating a substrate, etc. When the viscosity is within this range, at the time of applying the curable composition, the coating film will not spread too much, whereby it is possible to keep the cured product (adhesive layer) after curing to be in a predetermined thickness. Further, it is possible to make the thickness of the coating film to be uniform. From the above viewpoint, the viscosity of the curable composition is more preferably from 50 to 100,000 mPa·s, further preferably from 100 to 50,000 mPa·s. Here, the viscosity of the curable composition is a value measured at 25°C by using an E-type viscometer.

### <Adhesive layer>

The adhesive layer of the present invention is obtainable by curing the curable composition of the present invention. The curing reaction is preferably photocuring by light irradiation. In a case where the curable composition does not contain a coloring component, the adhesive layer can be made colorless transparent. Such an adhesive layer can be suitably used for an application where good transparency or visibility is required.

Further, the adhesive layer of the present invention is less susceptible to deterioration by light, in particular by ultraviolet rays, and thus, it is suitable for an application to be used at a place more likely to be irradiated with light, or at a place where irradiation with ultraviolet rays is strong.

The adhesive layer of the present invention preferably has a storage shear modulus (G') of 1 Hz at 25°C in the dynamic viscoelasticity measurement of from 5×10² to 2.5×10⁴ Pa. Further, the adhesive layer preferably has a loss tangent of 1 Hz at 25°C in the dynamic viscoelasticity measurement after curing of at most 1.4. The lower limit of the loss tangent is preferably at least 0.01.

When the storage shear modulus is within the above range, such is suitable as an adhesive layer at the time of bonding a protective plate to the display surface of a display device. In particular, when the storage shear modulus of the adhesive layer is within the above range, it is possible to prevent deterioration of the display quality, such as display irregularities of a display device.

In the method for measuring the storage shear modulus and the loss tangent, a dynamic viscoelasticity measuring apparatus is used, and the storage shear modulus and the loss tangent are values measured while applying a dynamic shear strain of 1% to the resin cured product. Specifically, they are measured by the method described in Examples.

The adhesive layer of the present invention may, for example, be produced by sandwiching the curable composition between a pair of separator films, and curing the curable composition by irradiation with light from one separator film.

As a method of sandwiching the curable composition between a pair of separator films, a method may be mentioned wherein the curable composition is applied on one separator film by a coating method such as a bar coating method, and another separator film is placed on the applied curable composition. At that time, it is possible to adjust the thickness of the adhesive layer by adjusting the coating amount of the curable composition.

As a method for irradiation with light, a method of curing the curable composition by irradiation with ultraviolet rays by using a high pressure mercury lamp may be mentioned.

Separator films are ones peelably adhered in order to protect the surface of the adhesive layer, and they are peeled off at the time of using the adhesive layer. As the material for the separator films, a polyester-type resin such as polyethylene terephthalate (PET), polybutylene terephthalate (PBT), polyethylene naphthalate (PEN), etc.; a polyamide-type resin such as nylon-6, nylon-66, etc.; an olefin-type resin such as biaxially stretched polypropylene, etc.; etc. may be mentioned.

A release agent may be applied on the surface of a separator film to be in close contact with the adhesive layer.

The thickness of the adhesive layer is not particularly limited, but is preferably from 0.03 to 5 mm, more preferably from 0.05 to 3 mm, further preferably from 0.07 to 2 mm. When the thickness of the adhesive layer is at least 0.03 mm, for example, in a case where a pair of surface materials are bonded by using the adhesive layer, the adhesive layer may effectively buffer an impact, etc. by an external force from one surface material side, whereby an effect for protecting the other surface material can easily be obtained. On the other hand, when the thickness of the adhesive layer is at most 5 mm, the entire thickness of the laminate will not be unnecessarily thick. The thickness of the adhesive layer may be adjusted, for example, by adjusting the amount of the curable composition to be sandwiched between the separators at the time of producing the adhesive layer.

The thickness of the adhesive layer is one calculated by measuring thicknesses of 5 points of a sample having the adhesive layer sandwiched by a pair of separator films, and subtracting, from their average value, the thickness of the pair of separator films.

### <Adhesive layer-equipped transparent surface material>

The adhesive layer-equipped transparent surface material of the present invention has the adhesive layer of the present invention on at least one surface of a transparent surface material.

In the case of having the adhesive layer on only one surface of a transparent surface material, such a surface material may, for example, be used as a protective plate for the display surface of a display device. In the case of having the adhesive layers on both surfaces of a transparent surface material, such a surface material may, for example, be used as a member for fixing a display device on a window or partition of a structure. In these applications, a light shielding portion may be provided along the peripheral portion of one surface of the transparent surface material.

The transparent surface material may be a glass plate or a resin plate. The glass constituting the glass plate may, for example, be a glass material such as soda-lime glass, aluminosilicate glass, borosilicate glass, or alkali-free glass. Among them, soda-lime glass or aluminosilicate glass is preferred in this application. Further, as the glass, in order to increase safety, laminated glass or tempered glass may be used, and glass subjected to physical tempering or chemical tempering may be used. In order to improve visibility, glass subjected to low reflection coating may be used.

The transparent resin constituting the resin plate may, for example, be a highly transparent resin material such as polycarbonate (PC) or polymethyl methacrylate (PMMA). Further, so long as it has the required transparency, a resin plate obtained by laminating two or more resin materials may be used, or a resin plate formed from a material of a resin composition having two or more resin materials mixed may be used.

The transparent surface material may be subjected to surface treatment in order to improve the interfacial adhesion with the adhesive layer. As a method for the surface treatment, a method of treating the surface of the transparent surface material with a silane coupling agent may be mentioned. Further, in a case where the transparent surface material is a glass plate, as a method for the surface treatment, a method of removing organic contaminants from the glass surface by e.g. plasma treatment, UV ozone treatment or UV treatment, may be mentioned.

The thickness of the transparent surface material may be set in view of mechanical strength and transparency. For example, the thickness of a glass plate as a protective plate for a display panel is preferably within a range of from 0.2 to 30 mm. The thickness of a transparent resin plate as a protective plate for a display panel is preferably within a range of from 0.4 to 10 mm.

Since the above adhesive layer will be less susceptible to deterioration by light, in particular by ultraviolet light, as the transparent surface material, one excellent in light resistance is preferred. Therefore, as the transparent surface material, a glass plate is preferred.

The shape of the surface material is not particularly limited, and, for example, a plate shape having stiffness is preferred. In a case where the surface material is plate-shaped, it may be flat, or may be a plate shape having a curved surface.

The thickness of the adhesive layer in the adhesive layer-equipped transparent surface material may be as described above, including the preferred range. When the thickness is at least 0.03 mm, it will be easy to bond the adhesive layer-equipped transparent surface material to another member such as a display device. On the other hand, when the thickness is at most 5 mm, the entire thickness of a laminate obtained by bonding the adhesive layer-equipped transparent surface material to another member, will not be unnecessarily thick.

The surface not in contact with the transparent surface material, of the adhesive layer of the adhesive layer-equipped transparent surface material, preferably has a separator film. This allows transportation without contaminating the adhesive layer of the adhesive layer-equipped transparent surface material. As the separator film, the same one as used in the production of the adhesive layer may be used.

The adhesive layer-equipped transparent surface material may be produced by applying the curable composition on a transparent surface material, followed by curing it to form an adhesive layer. Otherwise, it may be produced by producing an adhesive layer and transferring the adhesive layer on a transparent surface material.

### <Laminate>

The laminate of the invention has a pair of face materials laminated via the adhesive layer of the present invention. The adhesive layer is obtainable by curing the curable composition of the present invention.

The thickness of the adhesive layer in the laminate is as described above, including the preferred range. When the thickness is at least 0.03 mm, the adhesive layer will effectively buffer an impact, etc. due to an external force from the one surface member side, whereby it is easy to obtain an effect to protect the other surface material. Further, even if a foreign matter not exceeding the thickness of the adhesive layer is included between the pair of face materials at the time of producing the laminate, the average thickness does not change significantly by portions of the adhesive layer, whereby good transparency of the adhesive layer is easily obtainable. On the other hand, when the average thickness of the adhesive layer is at most 5 mm, the entire thickness of the laminate will not be unnecessarily thick.

The thickness of the adhesive layer may be adjusted, for example, by adjusting the amount of the curable composition at the time of the production of the laminate.

The pair of face materials may be transparent or opaque, but it is preferred that at least one of them is transparent. In order to obtain good transparency, the adhesive layer of the present invention is particularly suitable in a case where one or both of the facing materials are transparent.

Further, since the adhesive layer of the present invention is less susceptible to deterioration by light, in particular by ultraviolet rays, the surface materials are preferably ones excellent in weather resistance. Therefore, at least one of the surface materials is preferably a glass plate.

As the surface material, the same one as the transparent surface material used in the adhesive layer-equipped transparent surface material of the present invention may be used. The shape of the surface material is not particularly limited, and, for example, a plate shape having stiffness may be mentioned. In a case where the surface material is plate-shaped, it may be flat, or may be a plate shape having a curved surface.

Further, the surface material may be part of a structure. For example, it may be a glass plate or a transparent resin plate as a protective plate provided on the viewing side display surface of a display panel, or a glass plate or a transparent resin plate constituting a part of the outer surface of a structure provided outdoors and facing outdoors.

An example of the laminate is such an embodiment wherein one of the surface materials is part of a structure. The surface material which is part of a structure is not particularly limited, but since the adhesive layer is less susceptible to deterioration by light, in particular by ultraviolet rays, it may be a surface material for receiving sunlight such as part of a structure provided to face outdoors.

Such a face material may, for example, be an outermost member on the viewing side of an outdoor image display apparatus main body, or a glass plate or a transparent resin plate constituting part of the outer surface of a structure and facing outdoors. The outdoor image display apparatus means such an image display apparatus that its display screen is assumed to be subjected to sunlight, such as an image display device installed outdoors, or an image display device provided indoors so that its display screen faces outdoors.

The outermost member on the viewing side of an image display apparatus main body may, for example, be a surface material constituting the display surface of a display panel, or a protection plate mounted on the viewing side of a display panel.

The transparent surface material constituting part of the outer surface of a structure and facing outdoors may, for example, be a window glass of a building, or a surface material of the display surface of a display device provided in a bus stop or railway station.

Examples of the laminate may be an image display device having such a structure that the adhesive layer is sandwiched between an outermost member on the viewing side of an image display apparatus main body and a release film; an image display device having such a structure that the adhesive layer is sandwiched between an outermost member on the viewing side of an image display apparatus main body and a transparent surface material constituting part of the outer surface of the structure and facing outdoors; etc. As the image display device, an outdoor image display device is particularly preferred.

### EXAMPLES

In the following, the present invention will be described in further detail with reference to Examples, but the present invention should not to be construed as being limited to these Examples. Here, Ex. 1 to 3 are Examples of the present invention, and Ex. 4 to 7 are Comparative Examples.

### [Method for preparing adhesive layer]

A pair of separator films each having a releasing agent applied on one surface (hereinafter referred to also as a release surface) of a film of polyethylene terephthalate (PET), were prepared. Hereinafter, one having a PET film thickness of 125 µm will be referred to as the first separator, and one having a film thickness of 75 µm will be referred to as the second separator film.

Next, a center portion of a silicone sheet (manufactured by Tigers Polymer Corporation, silicone rubber sheet, hardness: 50) having a thickness of 0.5 mm, was cut out to prepare a mold silicone sheet. On the first separator film (length: 150 mm, width: 150 mm), the mold silicone sheet was placed, and the curable composition was applied by bar coating. Thereon, the second separator film (length: 150 mm, width: 150 mm) was placed so that the release surface was in close contact with the curable composition. Then, the curable composition was irradiated with ultraviolet light from a high pressure mercury lamp (integrated quantity of light: 1,500 mJ/cm²) and cured to obtain an adhesive layer.

### [Method for evaluating light resistance]

The adhesive layer produced by the above method was cut out in a size of 65 mm in length and 60 mm in width in the state of being sandwiched by the first and second separator films. Then, the second separator film was peeled off, and the adhesive layer was bonded to one surface of a soda-lime glass plate of 74 mm in length, 68 mm in width and 1.3 mm in thickness. Then, the first separator film was peeled off, and the adhesive layer was put in a vacuum laminating machine and disposed on an elevating stage so that the adhesive layer faced upward. And, another soda-lime glass plate of 74 mm in length, 68 mm in width and 1.3 mm in thickness was bonded to an upper lid of the vacuum laminating machine by a double-sided adhesive tape, and its position was adjusted so that it would be located just above the adhesive layer disposed on the elevating stage. Then, the pressure inside of the vacuum laminating machine was reduced to 10 Pa and maintained for 1 minute, whereupon the elevating stage was raised to let the adhesive layer be in close contact with the soda-lime glass plate attached to the upper lid. Thus, a laminate having the adhesive layer sandwiched by two soda-lime glass plates was prepared. After bonding, the pressure was returned to atmospheric pressure, and the sample was taken out from the vacuum laminating machine.

### [Evaluation Method]

The obtained laminate was subjected to a test by a super xenon weather meter (product name of Suga Test Instruments Co., Ltd.: SX75) under conditions of an ultraviolet irradiance of 150 W/m² and a black panel temperature of 63°C up to the longest time of 1,000 hours, whereby a change with time of the adhesive layer was observed.

### (Dripping)

By visual observation, whether or not dripping such that the adhesive layer softens and deforms, occurred, was confirmed. A case where dripping occurred before the lapse of 1,000 hours was evaluated as unacceptable, and a case where dripping did not occur at the time of the lapse of 1,000 hours was evaluated as acceptable. Unacceptable is indicated by × , and acceptable is indicated by O.

### (Sink mark)

By visual observation, whether or not "sink" occurred at the periphery of the cured product (adhesive layer) was confirmed. By "sink", it is meant that the edge portion (side portion) of the adhesive layer decreases during the test. A case where "sink" occurred before the lapse of 1,000 hours is indicated by x, and a case where "sink" did not occur at the time of the lapse of 1,000 hours is indicated by O.

### (In-plane yellowing)

With respect to yellowing of the adhesive layer, measurement was conducted in accordance with JIS K7373, and evaluation was made by the following standards. A case where upon expiration of 1,000 hours from the initiation of the test, the YI increase (dYI) in the adhesive layer of the laminate was larger than 2, was evaluated as unacceptable, and a case where the above increase (dYI) was at most 2, was evaluated as acceptable. Unacceptable is indicated by × , and acceptable is indicated by O.

### (Yellow frame)

By visual observation, whether or not a yellow frame occurred at the periphery of the adhesive layer of the laminate, was confirmed. A case where the yellow frame occurred at the time of the lapse of 1,000 hours, was evaluated as unacceptable, and a case where the yellow frame did not occur at the time of the lapse of 1,000 hours, was evaluated as acceptable. Unacceptable is indicated by × , and acceptable is indicated by ○.

### (White frame)

By visual observation, whether or not a white frame occurred at the periphery of the adhesive layer of the laminate, was confirmed. A case where the white frame occurred at the time of the lapse of 1,000 hours was evaluated to be unacceptable, and a case where the white frame did not occur at the time of the lapse of 1,000 hours was evaluated as acceptable. Unacceptable is indicated by × , and acceptable is indicated by O.

### [Storage shear modulus, loss tangent]

Using a rheometer (product name of Anton Paar: Physica MCR301), the adhesive layer was sandwiched in a space of 0.5 mm between a stage plate made of soda-lime glass and a measuring spindle (product name of Anton Paar: D-PP12/AL/S07). By applying a 1% dynamic shear strain, the storage shear modulus of the adhesive layer and its loss tangent (tanδ) were measured.

### [Production of polyol]

Into a pressure-resistant reactor equipped with a stirrer and a nitrogen inlet tube, 0.2 g of a zinc hexacyanocobaltate-glyme complex being a catalyst and 700 g of EXCENOL-720 being an initiator (manufactured by Asahi Glass Company, Limited, polyoxypropylene glycol (molecular weight calculated from the hydroxyl value: 700)) were added. 2,340 g of propylene oxide was reacted in a nitrogen atmosphere at 130°C for 5 hours to deactivate the catalyst. Thereafter, 12 g of potassium hydroxide as a catalyst was added, and dehydration treatment was carried out at 120°C for 2 hours, for alcoholation, and then 960 g of ethylene oxide was reacted. As a product, a polyoxyalkylene diol (polyol) having a hydroxy value of 28.7mgKOH/g (molecular weight calculated from the hydroxy value: 3,909) was obtained.

### [Production of urethane acrylate (A-1)]

Into a reaction vessel equipped with a stirrer and a nitrogen inlet tube, 460.3 g (0.1177mol) of the polyol obtained by the above method, and 31.9 g (0.143 mol) of IPDI (isophorone diisocyanate) as an isocyanate were added, and reacted at 70°C for 10 hours in presence of 0.039 g of DOTDS (dioctyltin distearate), to obtain an isocyanate group-terminated urethane prepolymer (prepolymer (P-1)). At that time, the amount of IPDI blended to the polyol was 121 by index. Further, the isocyanate group content of the prepolymer (P-1) was 0.0319 mass%.

To 492.2 g of the prepolymer (P-1) (isocyanate group content: 0.0559 mol), 0.135 g of DBTDL (dibutyltin dilaurate), 0.15 g of DtBHQ (di-tertiary butyl hydroquinone) and 6.5 g of HEA (hydroxyethyl acrylate) (hydroxy group content: 0.0559 mol) were added. A urethane acrylate (A-1) was thereby obtained. In the above reaction, the molar ratio of isocyanate groups of the prepolymer (P-1):hydroxy groups of HEA was 1:1.

The number average molecular weight of the obtained urethane acrylate (A-1) was 18,000. The number of functional groups of the charged raw material was 2.0, and the average number of acryloyloxy groups per molecule obtained by calculation (average number of functional groups) was 2.0. Further, in all alkyleneoxy groups, the content of propyleneoxy groups was 76 mass%, and the content of ethyleneoxy groups was 24 mass%.

The blend formulation (unit: parts by mass) of each curable composition is shown in Table 1. The respective components in Table 1 are as follows.

Urethane acrylate (A): Urethane acrylate (A-1) obtained by the above-mentioned method.

Monomer (B1): n-dodecyl acrylate (product name of Kyoeisha Chemical Co., Ltd.: LIGHT ACRYLATE L-A LA).

Monomer (B2): 4-hydroxybutyl acrylate (product name of Osaka Organic Chemical Industry Ltd.: 4HBA).

Light stabilizer: 1,2,2,6,6-pentamethyl-4-piperidyl methacrylate (product name of ADEKA Corporation: ADEKA STAB LA-82, hindered amine-type stabilizers (HALS1)).

Light stabilizer: (product name of ADEKA Corporation: ADEKA STAB LA-63P, hindered amine-type stabilizer (HALS2)).

Light stabilizer: bis(1,2,2,6,6-pentamethyl-4-piperidinyl) sebacate, (product name of BASF Corp.: TINUVIN 765, hindered amine-type light stabilizer (HALS3)).

Among the above light stabilizers, HALS1 has an addition-polymerizable unsaturated group in the molecule, and HALS2 and HALS3 are ones having no addition-polymerizable unsaturated group in the molecule.

Photopolymerization initiator: bis(2,4,6-trimethylbenzoyl)-phenyl phosphine oxide (product name of BASF Corp.: Irgacure 819, acylphosphine oxide-type photopolymerization initiator).

Ultraviolet absorber: (product name of BASF Corp.: Tinuvin 384-2, benzotriazole-type ultraviolet absorber).

Antioxidant: pentaerythritol tetrakis[3-(3,5-di-tert-butyl-4-hydroxyphenyl) propionate] (product name of BASF Corp.: Irganox1010, phenol-type antioxidant).

Chain transfer agent: n-octyl mercaptan.

Polymerization inhibitor: 2,5-di-tert-butyl hydroquinone (manufactured by Tokyo Kasei Kogyo Co., Ltd.).

Non-curable compound (D1): polypropylene glycol (product name of Asahi Glass Company, Limited: Preminol 5005).

Non-curable compound (D2): polypropylene glycol (product name of Asahi Glass Company, Limited: Preminol 7003).

Non-curable compound (D3): polypropylene glycol (product name of Asahi Glass Company, Limited: EXCENOL 3020).

### [Ex. 1 to 7]

A curable composition was prepared in the blend formulation (unit: parts by mass) as shown in Table 1.

First, the urethane acrylate (A-1), the monomer (B1) and the monomer (B2) were uniformly mixed to obtain a mixture. To the mixture, the light stabilizer, and the additives shown in Table 1 (a photopolymerization initiator, an ultraviolet absorber, an antioxidant, a chain transfer agent, a polymerization inhibitor) were uniformly dissolved to obtain an intermediate composition. Next, the intermediate composition and the non-curable component were uniformly dissolved to obtain a curable composition. The viscosity at 25°C of the obtained curable composition was in a range of from 1,000 to 10,000 mPa·s in each case.

**TABLE 1**

| | | Ex. 1 | Ex. 2 | Ex. 3 | Ex. 4 | Ex. 5 | Ex. 6 | Ex. 7 |
|---|---|---|---|---|---|---|---|---|
| Curable compound | Urethane acrylate (A) | 30 | 30 | 30 | 30 | 30 | 30 | 30 |
| | Monomer (B1) | 18 | 18 | 18 | 18 | 18 | 18 | 18 |
| | Monomer (B2) | 12 | 12 | 12 | 12 | 12 | 12 | 12 |
| Non-curable compound | D1 | | 20 | 20 | 20 | 20 | 20 | 20 |
| | D2 | | 20 | 20 | 20 | 20 | 20 | 20 |
| | D3 | 40 | | | | | | |
| Light stabilizer | HALS1 | 0.5 | 0.5 | 0.3 | | | | |
| | HALS2 | | | | | | 0.5 | |
| | HALS3 | | | | | | | 0.3 |
| Photopolymerization initiator | | 0.3 | 0.3 | 0.3 | 0.3 | 0.3 | 0.3 | 0.3 |
| Ultraviolet absorber | | 0.3 | 0.3 | 0.3 | 0 | 0.3 | 0.3 | 0.3 |
| Antioxidant | | 0.5 | 0.5 | 0.5 | 0.5 | 0.5 | 0.5 | 0.5 |
| Chain transfer agent | | 0.3 | 0.3 | 0.3 | 0.3 | 0.3 | 0.3 | 0.3 |
| Polymerization inhibitor | | 0.048 | 0.048 | 0.048 | 0.048 | 0.048 | 0.048 | 0.048 |
| Light resistance | Dripping | ○ | ○ | ○ | × | ○ | ○ | ○ |
| | Sink mark | ○ | ○ | ○ | - | × | ○ | ○ |
| | In-plane yellowing | ○ | ○ | ○ | - | × | ○ | × |
| | Yellow frame | ○ | ○ | ○ | - | × | ○ | ○ |
| | White frame | ○ | ○ | ○ | - | ○ | × | × |
| Viscoelasticity | Storage shear modulus [Pa] | 10×10³ | 10×10³ | 11×10³ | 12×10³ | 10×10³ | 11×10³ | 10×10³ |
| | Loss tangent [-] | 0.5 | 0.5 | 0.5 | 0.5 | 0.6 | 0.5 | 0.5 |

In each of the adhesive layers obtained by curing the curable compositions in Ex. 1 to 7, the storage shear modulus of 1 Hz at 25°C was from 5×10² to 2.5×10⁴ Pa, and the loss tangent was at most 1.4.

In Ex. 1 to 3, the curable composition had a curable compound and a light stabilizer, wherein as the light stabilizer, a light stabilizer having an addition-polymerizable unsaturated group in the molecule was used.

In Ex. 4 and 5, the curable compound contained no light stabilizer. In Ex. 6 and 7, the curable composition contained a curable compound and a light stabilizer, wherein as the light stabilizer, a light stabilizer containing no addition-polymerizable unsaturated group in the molecule was used. As apparent from Table 1, in the adhesive layer obtained by curing the curable composition in these Ex., deterioration such as dripping or sink mark was observed in the light resistance test.

Further, in the adhesive layer obtained by curing the curable composition in Ex. 6 and 7 containing a curable compound and a light stabilizer containing no addition-polymerizable unsaturated group in the molecule, in the light resistance test, dripping was prevented, but a white frame was observed in the adhesive layer.

In contrast, the adhesive layer obtained by curing the curable composition in each of Ex. 1 to 3 containing a curable compound and a light stabilizer having an addition-polymerizable unsaturated group in the molecule, showed a very high light resistance as the test result.

From the comparison between Ex. 1 to 3 and Ex. 6 and 7, it was shown that in the case of forming an adhesive layer by curing the curable composition, the improvement in light resistance was insufficient by only incorporating a light stabilizer to the curable composition, and the light resistance was remarkably improved as a result that the light stabilizer was taken into the network of the cured product (adhesive layer).

### INDUSTRIAL APPLICABILITY

The adhesive layer obtainable by curing the curable composition of the present invention is less susceptible to deterioration by light and thus is widely useful for an adhesive layer-equipped transparent surface material, a laminate laminated via the adhesive layer and further an image display device having the adhesive layer adhered to the outermost member on the viewing side, particularly to be used or installed outdoors.

The entire disclosure of Japanese Patent Application No. 2015-249002 filed on December 21, 2015 including specification, claims and summary is incorporated herein by reference in its entirety.

## Claims

1. A curable composition **characterized by** comprising a curable compound, a photopolymerization initiator and a light stabilizer, wherein
the curable compound comprises at least one urethane (meth)acrylate (A) having an addition-polymerizable unsaturated group and having a number average molecular weight of from 1,000 to 100,000, and at least one monomer (B) having an addition-polymerizable unsaturated group and having a number average molecular weight of from 100 to 600, and
the light stabilizer is a light stabilizer having an addition-polymerizable unsaturated group in the molecule.

2. The curable composition according to Claim 1, wherein the light stabilizer is a compound represented by the following formula 1, 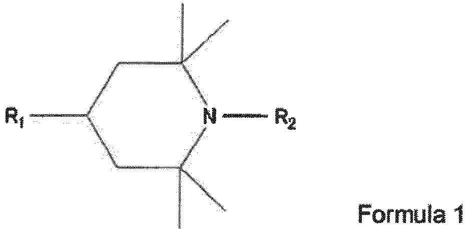 in the formula 1, R¹ is an organic group having an addition-polymerizable unsaturated group, and R² is a hydrogen atom, a C₁₋₆ alkyl group or a C₁₋₆ alkoxy group.

3. The curable composition according to Claim 1 or 2, which further contains a non-curable compound, wherein
the non-curable compound is a polyoxyalkylene polyol or polyoxyalkylene monool having from 1 to 6 hydroxy groups per molecule.

4. The curable composition according to Claim 3, which contains from 10 to 99 mass% of the curable compound and from 1 to 90 mass% of the non-curable compound per 100 mass% in total of the curable compound and the non-curable compound, and contains from 0.01 to 10 parts by mass of the photopolymerization initiator and from 0.001 to 10 parts by mass of the light stabilizer per 100 parts by mass in total of the curable compound and the non-curable compound.

5. The curable composition according to any one of Claims 1 to 4, which contains, as the monomer (B), a monomer (B1) having an addition-polymerizable unsaturated group, having no hydroxyl group and having a molecular weight of from 100 to 500.

6. The curable composition according to any one of Claims 1 to 5, which further contains an ultraviolet absorber or an antioxidant.

7. The curable composition according to Claim 6, wherein the ultraviolet absorber is a benzotriazole-type ultraviolet absorber, and the antioxidant is at least one member selected from the group consisting of a phenol-type antioxidant, a phosphorus-type antioxidant and an antioxidant having a thioether skeleton.

8. The curable composition according to Claim 6 or 7, which contains from 0 to 5 parts by mass of the antioxidant and from 0 to 10 parts by mass of the ultraviolet absorber per 100 parts by mass in total of the curable compound and the non-curable compound.

9. An adhesive layer formed by curing the curable composition as defined in any one of Claims 1 to 8.

10. The adhesive layer according to Claim 9, which has a storage shear modulus of 1 Hz at 25°C of from 5×10² to 2.5×10⁴ Pa and a loss tangent of at most 1.4.

11. An adhesive layer-equipped transparent surface material having the adhesive layer as defined in Claim 9 or 10 on at least one surface of a transparent surface material.

12. A laminate having a pair of surface materials laminated via the adhesive layer as defined in Claim 9 or 10.

13. An image display device comprising an image display device main body, the adhesive layer as defined in Claim 9 or 10 and a transparent surface material, wherein via the adhesive layer, an outermost member on the viewing side of the image display device main body and the transparent surface material are laminated.

14. The image display device according to Claim 13, wherein the transparent surface material constitutes a part of the outer surface of a structure, and is a surface material facing outside.
